# EUROPEAN PATENT SPECIFICATION

(11) **EP 3 366 449 B1**
(45) Date of publication and mention of the grant of the patent: **12.05.2021**
(21) Application number: 18159048.0
(22) Date of filing: 28.02.2018
(51) Int. Cl.: B29C 45/80, B29C 45/56, B29C 45/66

(54) **INJECTION MOLDING MACHINE**
SPRITZGIESSMASCHINE
MACHINE DE MOULAGE À INJECTION

(30) Priority: 28.02.2017 JP 2017037772
(43) Date of publication of application: 29.08.2018
(73) Proprietor: Sumitomo Heavy Industries, Ltd., Tokyo 141-6025 (JP)
(72) Inventor: SHIBATA, Tatsuya, Chiba-shi, Chiba 263-0001 (JP)
(74) Representative: Louis Pöhlau Lohrentz

(56) References cited:
- EP-A1- 1 584 445
- US-A1- 2015 209 990

## Description

### BACKGROUND OF THE INVENTION

### Field of the Invention

The present invention relates to an injection molding machine.

### Description of Related Art

A toggle type mold clamping unit of an injection molding machine disclosed in Japanese Unexamined Patent Application Publication No. 2010-173077 includes a stationary platen to which a stationary mold is attached, a movable platen to which a movable mold is attached, a mold clamping housing, a plurality of tie bars which penetrate the movable platen and connect the stationary platen and the mold clamping housing to each other, and a toggle mechanism which is provided between the movable platen and the mold clamping housing. An appropriate mold clamping force is obtained by driving a crosshead configuring the toggle mechanism to a predetermined position.

United States Patent Application US 2015/0209990 A1 discloses a molding machine in which an operation loss due to play of a driving unit is compensated by an additional movement.

European Patent Application EP 1 584 445 A1 discloses an injection molding machine in which a mold thickness adjustment is used for compensating the stretch of tie bars.

The injection molding machine includes a motor which moves a movable member such as a crosshead. In some cases, the movable member is held in a position for a predetermined time while being pushed in a predetermined direction by a driving force of the motor.

In the related art, a load of the motor increases when the movable member is held in a position for the predetermined time while being pushed in the predetermined direction by the driving force of the motor, and it is difficult to shorten a molding cycle or decrease energy consumption.

### SUMMARY OF THE INVENTION

The present invention is made in consideration of the above-described problems, and a main object thereof is to provide an injection molding machine capable of reducing a load of a motor.

In order to achieve the above-described object, according to a first aspect of the present invention, there is provided an injection molding machine as defined in claim 1, including: a crosshead; a mold clamping motor which moves the crosshead; and a controller which controls the mold clamping motor, in which the controller moves the crosshead in a predetermined direction via a driving force of the mold clamping motor, and thereafter, rotates the mold clamping motor by a predetermined amount in a direction opposite to a direction in which the mold clamping motor moves the crosshead in the predetermined direction, and holds a position of the crosshead for a predetermined time at a position at which the mold clamp motor is rotated by the predetermined amount in a state where the crosshead is pushed in the predetermined direction by the driving force of the mold clamping motor.

In order to achieve the above-described object, according to a second aspect of the present invention, there is provided an injection molding machine as defined in claim 2, including: an ejector rod; an ejector motor which moves the ejector rod; and a controller which controls the ejector motor, in which the controller moves the ejector rod in a predetermined direction via a driving force of the ejector motor, and thereafter, rotates the ejectormotor by a predetermined amount in a direction opposite to a direction in which the ejector motor moves the ejector rod in the predetermined direction, and holds a position of the ejector rod for a predetermined time at a position at which the ejector motor is rotated by the predetermined amount in a state where the ejector rod is pushed in the predetermined direction by the driving force of the ejector motor.

In order to achieve the above-described object, according to a third aspect of the present invention, there is provided an injection molding machine as defined in claim 3, including: a screw; an injection motor which moves the screw; and a controller which controls the injection motor, in which the controller moves the screw in a predetermined direction via a driving force of the injection motor, and thereafter, rotates the injection motor by a predetermined amount in a direction opposite to a direction in which the injection motor moves the screw in the predetermined direction, and holds a position of the screw for a predetermined time at a position at which the injection motor is rotated by the predetermined amount in a state where the screw is pushed in the predetermined direction by the driving force of the injection motor.

According to the aspect of the present invention, the injection molding machine capable of reducing a load of the motor is provided.

### BRIEF DESCRIPTION OF THE DRAWINGS

Fig. 1 is a view showing a state when a mold opening of an injection molding machine according to an embodiment is completed.
Fig. 2 is a view showing a state when a mold of the injection molding machine according to the embodiment is clamped.
Fig. 3 is a flowchart showing processing of a controller according to the embodiment.
Fig. 4 is a view showing a state where a crosshead according to the embodiment moves in a mold closing direction, and thereafter, the crosshead is slightly displaced in a mold opening direction and a position of the crosshead is held.
Figs. 5A to 5C are views showing an operation of compression molding of a mold clamping unit according to an embodiment.
Figs. 6A and 6B are views showing an operation of compression molding of an ejector unit according to an embodiment.

### DETAILED DESCRIPTION OF THE INVENTION

Hereinafter, an embodiment of the present invention is described with reference to the drawings. However, in each drawing, the same or corresponding reference numerals are assigned to the same or corresponding configurations, and descriptions thereof are omitted.

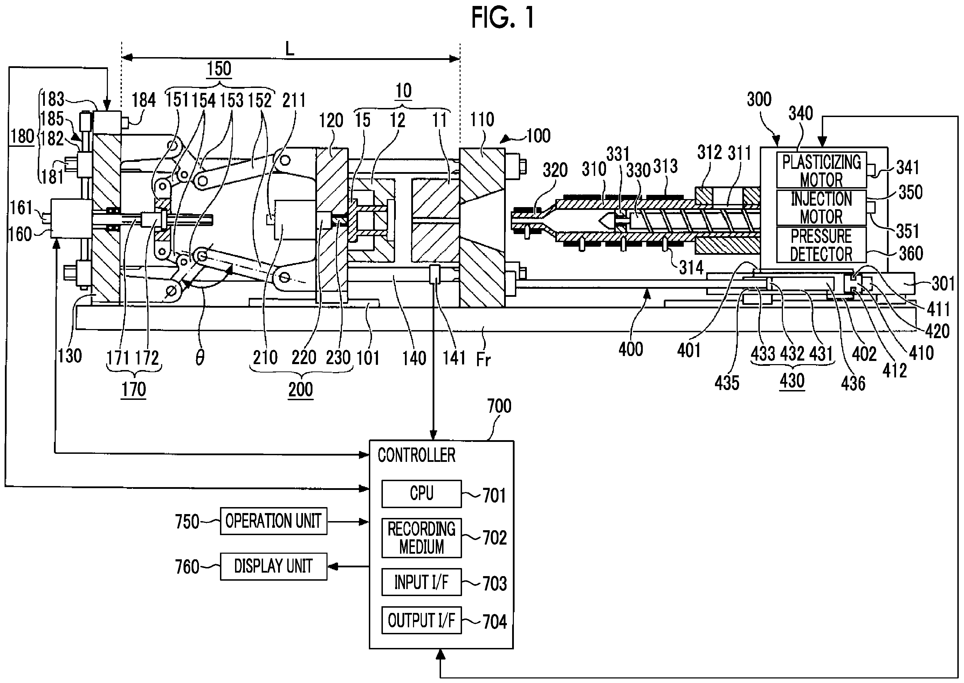

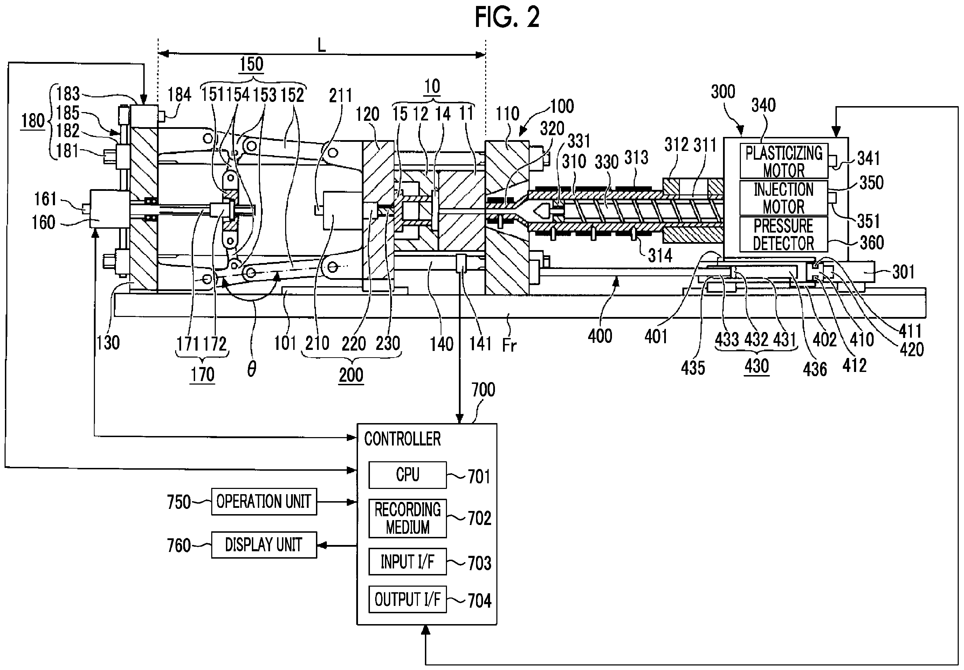

Injection Molding Machine
Fig. 1 is a view showing a state when a mold opening of an injection molding machine according an embodiment is completed. Fig. 2 is a view showing a state when a mold of the injection molding machine according to the embodiment is clamped. As shown in Figs. 1 and 2, the injection molding machines include a mold clamping unit 100, an ejector unit 200, an injection unit 300, a movement unit 400, and a controller 700. Hereinafter, each component of the injection molding machine will be described.

### Mold Clamping Unit

In descriptions of the mold clamping unit 100, a movement direction (right direction in Figs. 1 and 2) of a movable platen 120 when a mold is closed is defined as a front side, and a movement direction (left direction in Figs. 1 and 2) of the movable platen 120 when the mold is open is defined as a rear side.

The mold clamping unit 100 performs closing, clamping, and opening on a mold unit 10. For example, the mold clamping unit 100 is a horizontal type clamping unit and mold opening and closing directions are a horizontal direction. The mold clamping unit 100 includes a stationary platen 110, the movable platen 120, a toggle support 130, a tie bar 140, a toggle mechanism 150, a mold clamping motor 160, a motion conversion mechanism 170, and a mold space adjustment mechanism 180.

The stationary platen 110 is fixed to the frame Fr. A stationary mold 11 is attached to a surface of the stationary platen 110 facing the movable platen 120.

The movable platen 120 is movable in the mold opening and closing directions with respect to the frame Fr. A guide 101 which guides the movable platen 120 is placed on the frame Fr. A movable mold 12 is attached to a surface of the movable platen 120 facing the stationary platen 110.

The movable platen 120 moves forward or rearward with respect to the stationary platen 110, and thus, closing, clamping, and opening of the mold are performed. The mold unit 10 is configured of the stationary mold 11 and the movable mold 12.

The toggle support 130 is connected so as to be separated from the stationary platen 110, and is placed on the frame Fr to be movable in mold opening and closing directions. In addition, the toggle support 130 may be movable along a guide which is placed on the frame Fr. The guide of the toggle support 130 may be also used as the guide 101 of the movable platen 120.

In addition, in the present embodiment, the stationary platen 110 is fixed to the frame Fr, and the toggle support 130 is movable in the mold opening and closing directions with respect to the frame Fr. However, the toggle support 130 may be fixed to the frame Fr, and the stationary platen 110 may be movable in the mold opening and closing directions with respect to the frame Fr.

The stationary platen 110 and the toggle support 130 are connected to each other with a gap L in the mold opening and closing directions by the tie bar 140. A plurality of tie bars 140 may be used. The tie bars 140 are parallel in the mold opening and closing directions and extend according to a mold clamping force. A tie bar strain detector 141 which detects strain of the tie bar 140 is provided in at least one tie bar 140. The tie bar strain detector 141 sends signal indicating the detection results to the controller 700. The detection results of the tie bar strain detector 141 are used for detection or the like of the mold clamping force.

In addition, in the present embodiment, the tie bar strain detector 141 is used as a mold clamping force detector which detects the mold clamping force. However, the present invention is not limited to this. The mold clamping force detector is not limited to a strain gauge type detector, and may be a piezoelectric type detector, a capacitance type detector, a hydraulic type detector, an electromagnetic type detector, or the like, and the attachment position of the mold clamping force detector is also not limited to the tie bar 140.

The toggle mechanism 150 is disposed between the movable platen 120 and the toggle support 130 and moves the movable platen 120 in the mold opening and closing directions with respect to the toggle support 130. The toggle mechanism 150 is configured of a crosshead 151, a pair of link groups, or the like. Each link group includes a first link 152 and a second link 153 which are bendably/strechably connected to each other by pins or the like. The first link 152 is attached to the movable platen 120 so as to be oscillated by pins or like and the second link 153 is attached to the toggle support 130 so as to be oscillated by pins or the like. The second link 153 is attached to the crosshead 151 via a third link 154. If the crosshead 151 moves forward or rearward with respect to the toggle support 130, the first link 152 and the second link 153 are bent and stretched and the movable platen 120 moves forward or rearward with respect to the toggle support 130.

In addition, the configuration of the toggle mechanism 150 is not limited to the configuration shown in Figs. 1 and 2. For example, in Figs. 1 and 2, the number of nodes of each link group is five. However, the number of nodes may be four, and one end portion of the third link 154 may be connected to a node between the first link 152 and the second link 153.

The mold clamping motor 160 is attached to the toggle support 130 and operates the toggle mechanism 150. The mold clamping motor 160 moves the crosshead 151 forward or rearward with respect to the toggle support 130, and thus, the first links 152 and the second links 153 are bent and stretched, and the movable platen 120 moves forward or rearward with respect to the toggle support 130. The mold clamping motor 160 is directly connected to the motion conversion mechanism 170. However, the mold clamping motor 160 may be connected to the motion conversion mechanism 170 via a belt, a pulley, or the like.

The motion conversion mechanism 170 converts a rotary motion of the mold clamping motor 160 into a linear motion of the crosshead 151. The motion conversion mechanism 170 includes a screw shaft 171 and a screw nut 172 which is screwed to the screw shaft 171. A ball or a roller may be interposed between the screw shaft 171 and the screw nut 172.

The mold clamping unit 100 performs a mold closing process, a mold clamping process, a mold opening process, or the like under the control of the controller 700.

In the mold closing process, the mold clamping motor 160 is driven to move the crosshead 151 forward to a mold closing completion position at a set speed. Accordingly, the movable platen 120 moves forward or the movable mold 12 comes into contact with the stationary mold 11. For example, a position or speed of the crosshead 151 is detected using a mold clamping motor encoder 161 or the like. The mold clamping motor encoder 161 detects the rotation of the mold clamping motor 160 and sends signals indicating the detection results to the controller 700.

In the mold clamping process, the mold clamping motor 160 is further driven to further move the crosshead 151 forward from the mold closing completion position to a mold clamping position, and thus, a mold clamping force is generated. When the mold is clamped, a cavity space 14 is formed between the movable mold 12 and the stationary mold 11, and the cavity space 14 is filled with a liquid molding material by the injection unit 300. A filled molding material is solidified, and thus, a molding product is obtained. A plurality of cavity spaces 14 may be provided, and in this case, a plurality of molding products may be simultaneously obtained.

In the mold opening process, the mold clamping motor 160 is driven to move the crosshead 151 rearward to a mold opening completion position at a set speed. Accordingly, the movable platen 120 moves rearward, and the movable mold 12 is separated from the stationary mold 11. Thereafter, the ejector unit 200 ejects the molding product from the movable mold 12.

Setting conditions in the mold closing process and the mold clamping process are collectively set as a series of setting conditions. For example, a speed or positions (including a speed switching position, a mold closing completion position, and a mold clamping position) of the crosshead 151 in the mold closing process and the mold clamping process are collectively set as a series of setting conditions. In addition, instead of the speed, the positions, or the like of the crosshead 151, a speed, positions, or the like of the movable platen 120 may be set. Moreover, instead of the position (for example, the mold clamping position) of the crosshead or the position of the movable platen, the mold clamping force may be set.

Meanwhile, the toggle mechanism 150 amplifies a driving force of the mold clamping motor 160 and transmits the driving force to the movable platen 120. An amplification magnification of the toggle mechanism 150 is also referred to as a toggle magnification. The toggle magnification is changed according to an angle θ (hereinafter, also referred to a "link angle θ") between the first link 152 and the second link 153. The link angle θ is obtained from the position of the crosshead 151. When the link angle θ is 180°, the toggle magnification becomes the maximum value.

In a case where a space of the mold unit 10 is changed by replacement of the mold unit 10, a temperature change of the mold unit 10, or the like, a mold space adjustment is performed such that a predetermined mold clamping force is obtained when the mold is clamped. For example, in the mold space adjustment, the gap L between the stationary platen 110 and the toggle support 130 is adjusted such that the link angle θ of the toggle mechanism 150 at the time of a touch type where the movable mold 12 comes into contact with the stationary mold 11 becomes a predetermined angle.

The mold clamping unit 100 includes the mold space adjustment mechanism 180 which performs the mold space adjustment by adjusting the gap L between the stationary platen 110 and the toggle support 130. The mold space adjustment mechanism 180 includes a screw shaft 181 which is formed on a rear end portion of the tie bar 140, a screw nut 182 which is rotatably supported by the toggle support 130, and a mold space adjustment motor 183 which rotates the screw nut 182 screwed to the screw shaft 181.

The screw shaft 181 and the screw nut 182 are provided for each tie bar 140. A rotation of the mold space adjustment motor 183 may be transmitted to a plurality of screw nuts 182 via a rotation transmission portion 185. The plurality of screw nuts 182 can be synchronously rotated. In addition, it is possible to rotate the plurality of screw nuts 182 individually by changing a transmission path of the rotation transmission portion 185.

For example, the rotation transmission portion 185 is configured of a gear or the like. In this case, a driven gear is formed on an outer periphery of each screw nut 182, a drive gear is attached to an output shaft of the mold space adjustment motor 183, and an intermediate gear which engages with a plurality of driven gears and drive gears is rotatably held by a center portion of the toggle support 130. In addition, the rotation transmission portion 185 may be configured of a belt, a pulley, or the like instead of the gear.

An operation of the mold space adjustment mechanism 180 is controlled by the controller 700. The controller 700 drives the mold space adjustment motor 183 to rotate the screw nut 182, and thus, the position of the toggle support 130 which rotatably holds the screw nut 182 with respect to the stationary platen 110 is adjusted, and the gap L between the stationary platen 110 and the toggle support 130 is adjusted.

In addition, in the present embodiment, the screw nut 182 is rotatably held with respect to the toggle support 130 and the tie bar 140 in which the screw shaft 181 is formed is fixed to the stationary platen 110. However, the present invention is not limited to this.

For example, the screw nut 182 may be rotatably held with respect to the stationary platen 110 and the tie bar 140 may be fixed to the toggle support 130. In this case, the gap L can be adjusted by rotating the screw nut 182.

Moreover, the screw nut 182 may be fixed to the toggle support 130 and the tie bar 140 may be rotatably held with respect to the stationary platen 110. In this case, the gap L can be adjusted by rotating the tie bar 140.

Moreover, the screw nut 182 is fixed to the stationary platen 110 and the tie bar 140 is rotatably held with respect to the toggle support 130. In this case, the gap L can be adjusted by rotating the tie bar 140.

The gap L is detected using a mold space adjustment motor encoder 184. The mold space adjustment motor encoder 184 detects a rotation amount or a rotation direction of the mold space adjustment motor 183 and sends signals indicating the detection results to the controller 700. The detection results of the mold space adjustment motor encoder 184 is used to control the position of the toggle support 130 or to monitor or control the gap L.

The mold space adjustment mechanism 180 rotates one of the screw shaft 181 and the screw nut 182 which are screwed to each other to adjust the gap L. A plurality of mold space adjustment mechanisms 180 may be used, and a plurality of mold space adjustment motor 183 may be used.

Moreover, in order to adjust the gap L, the mold space adjustment mechanism 180 of the present embodiment includes the screw shaft 181 formed on the tie bar 140 and the screw nut 182 screwed to the screw shaft 181. However, the present invention is not limited to this.

For example, the mold space adjustment mechanism 180 may include a tie bar temperature controller which controls the temperature of the tie bar 140. The tie bar temperature controller is attached to each tie bar 140 and coordinates the temperatures of the plurality of tie bars 140. The tie bar 140 is lengthened by heat expansion and the gap L increases as the temperature of the tie bar 140 increases. The temperatures of the plurality of tie bars 140 can be adjusted independently.

For example, the tie bar temperature controller includes a heating unit such as a heater and controls the temperature of the tie bar 140 by heating. The tie bar temperature controller may include a cooler such as a water cooling jacket and may control the temperature of the tie bar 140 by cooling. The tie bar temperature controller may include both the heating unit and the cooler.

In addition, the mold clamping unit 100 of the present embodiment is a horizontal type mold clamping unit in which the mold opening and closing directions are horizontal directions. However, the mold clamping unit 100 may be a vertical type mold clamping unit in which the mold opening and closing directions are vertical directions. The vertical type mold clamping unit includes a lower platen, an upper platen, a toggle support, tie bars, a toggle mechanism, a mold clamping motor, or the like. Any one of the lower platen and the upper platen is used as a stationary platen and the other is used as a movable platen. A lower mold is attached to the lower platen and an upper mold is attached to the upper platen. The lower mold and the upper mold configure the mold unit. The lower mold may be attached to the lower platen via a rotary table. The toggle support is disposed below the lower platen. The toggle mechanism is disposed between the toggle support and the lower platen and lifts or lowers the movable platen. The mold clamping motor operates the toggle mechanism. The tie bars are parallel to each other in the vertical direction, penetrate the lower platen, and connect the upper platen and the toggle support to each other. In a case where the mold clamping unit is a vertical mold clamping unit, in general, the number of the tie bars is three. In addition, the number of the tie bars is not particularly limited.

In addition, the mold clamping unit 100 of the present embodiment has the mold clamping motor 160 as a drive source. However, the mold clamping unit 100 may have a hydraulic cylinder instead of the mold clamping motor 160. In addition, the mold clamping unit 100 may have a linear motor for opening and closing a mold and may have an electromagnet for clamping a mold.

Ejector Unit
Similarly to the descriptions of the mold clamping unit 100, in descriptions of the ejector unit 200, the movement direction (right direction in Figs. 1 and 2) of the movable platen 120 when the mold is closed is defined as the front side, and the movement direction (left direction in Figs. 1 and 2) of the movable platen 120 when the mold is open is defined as the rear side.

The ejector unit 200 ejects the molding product from the mold unit 10. The ejector unit 200 includes an ejector motor 210, a motion conversion mechanism 220, an ejector rod 230, or the like.

The ejector motor 210 is attached to the movable platen 120. The ejector motor 210 is directly connected to the motion conversion mechanism 220. However, the ejector motor 210 may be connected to the motion conversion mechanism 220 via a belt, a pulley, or the like.

The motion conversion mechanism 220 converts a rotary motion of the ejector motor 210 into a linear motion of the ejector rod 230. The motion conversion mechanism 220 includes a screw shaft and a screw nut which is screwed to the screw shaft. A ball or a roller may be interposed between the screw shaft and the screw nut.

The ejector rod 230 can move forward or rearward through a through-hole of the movable platen 120. A front end portion of the ejector rod 230 comes into contact with a movable member 15 which is disposed to be movable forward or rearward inside the movable mold 12. The front end portion of the ejector rod 230 may be connected to the movable member 15 or may not be connected to the movable member 15.

The ejector unit 200 performs an ejection process under the control of the controller 700.

In the ejection process, the ejector motor 210 is driven to move the ejector rod 230 forward from a standby position to an ejection position at a set speed, and thus, the movable member 15 moves forward and the molding product is ejected. Thereafter, the ejector motor 210 is driven to move the ejector rod 230 rearward at a set speed, and thus, the movable member 15 moves rearward to an original standby position. For example, a position or speed of the ejector rod 230 is detected using an ejector motor encoder 211. The ejector motor encoder 211 detects the rotation of the ejector motor 210 and sends signals indicating the detection results to the controller 700.

### Injection Unit

Unlike the descriptions of the mold clamping unit 100 or the descriptions of the ejector unit 200, in descriptions of the injection unit 300, a movement direction (left direction in Figs. 1 and 2) of a screw 330 during filling is referred to as a front side, and a movement direction (right direction in Figs. 1 and 2) of the screw 330 during plasticizing is referred to as a rear side.

The injection unit 300 is installed on a slide base 301 which is movable forward or rearward with respect to the frame Fr, and is movable forward or rearward with respect to the mold unit 10. The injection unit 300 comes into contact with the mold unit 10, and thus, the cavity space 14 inside the mold unit 10 is filled with the molding material. For example, the injection unit 300 includes a cylinder 310, a nozzle 320, the screw 330, a plasticizing motor 340, an injection motor 350, a pressure detector 360, or the like.

The cylinder 310 heats the molding material which is supplied from a supply port 311 to the inner portion of the cylinder 310. The supply port 311 is formed on a rear portion of the cylinder 310. A cooler 312 such as a water cooling cylinder is provided on an outer periphery of the rear portion of the cylinder 310. A heating unit 313 such as a band heater and the temperature detector 314 are provided on an outer periphery of the cylinder 310 on a front side of the cooler 312.

The cylinder 310 is divided into a plurality of zones in an axial direction (right and left directions in Figs. 1 and 2) of the cylinder 310. The heating unit 313 and the temperature detector 314 are provided in each zone. The controller 700 controls the heating unit 313 such that a detection temperature of the temperature detector 314 for each zone becomes a set temperature.

The nozzle 320 is provided on the front end portion of the cylinder 310 and presses the mold unit 10. The heating unit 313 and the temperature detector 314 are provided on an outer periphery of the nozzle 320. The controller 700 controls the heating unit 313 such that a detection temperature of the nozzle 320 becomes a set temperature.

The screw 330 is disposed in the cylinder 310 so as to be rotatable and movable forward or rearward. If the screw 330 rotates, the molding material is fed forward along spiral grooves of the screw 330. The molding material is gradually melted by heat from the cylinder 310 while being fed forward. The liquid molding material is fed to a front portion of the screw 330 and is accumulated in the front portion of the cylinder 310, and thus, the screw 330 moves rearward. Thereafter, if the screw 330 moves forward, the liquid molding material accumulated in front of the screw 330 is injected from the nozzle 320 and the inside of the mold unit 10 is filled with the liquid molding material.

A backflow prevent ion ring 331 is attached to a front portion of the screw 330 to be movable forward or rearward as a backflow prevention valve which prevents backflow of the molding material from the front side of the screw 330 toward the rear side when the screw 330 is pushed forward.

When the screw 330 moves forward, the backflow prevention ring 331 is pushed toward the rear side by the pressure of the molding material in front of the screw 330 and moves rearward to a close position (refer to Fig. 2) at which a flow path of the molding material is closed. Accordingly, the molding material accumulated in front of the screw 330 is prevented from flowing toward the rear side.

Meanwhile, when the screw 330 rotates, the backflow prevention ring 331 is pushed toward the front side by the pressure of the molding material fed forward along the spiral grooves of the screw 330 and moves forward to an open position (refer to Fig. 1) at which the flow path of the molding material is open. Accordingly, the molding material is fed to the front side of the screw 330.

The backflow prevention ring 331 may be either a co-rotation type ring which rotates together with the screw 330 or a non-co-rotation type ring which does not rotate together with the screw 330.

In addition, the injection unit 300 may include a drive source which moves the backflow prevention ring 331 forward or rearward between the open position and the close position.

The plasticizing motor 340 rotates the screw 330. A drive source which rotates the screw 330 is not limited to the plasticizing motor 340 and may be a hydraulic pump or the like, for example.

The injection motor 350 moves the screw 330 forward or rearward. A motion conversion mechanism or the like which converts a rotary motion of the injection motor 350 into a linear motion of the screw 330 is provided between the injection motor 350 and the screw 330. For example, the motion conversion mechanism includes a screw shaft and a screw nut which is screwed to the screw shaft. A ball, a roller, or the like may be provided between the screw shaft and the screw nut. A drive source which moves the screw 330 forward or rearward is not limited to the injection motor 350 and may be a hydraulic cylinder, for example .

The pressure detector 360 detects a pressure transmitted between the injection motor 350 and the screw 330. The pressure detector 360 is provided on a force transmission path between the injection motor 350 and the screw 330 and detects a pressure applied to the pressure detector 360.

The pressure detector 360 sends signals indicating the detection results to the controller 700. The detection results of the pressure detector 360 are used to control or monitor a pressure received by the screw 330 from the molding material, a back pressure with respect to the screw 330, a pressure applied from the screw 330 to the molding material, or the like.

The injection unit 300 performs a fillingprocess, a holding pressure process, a plasticizing process, or the like under the control of the controller 700.

In the filling process, the injection motor 350 is driven to move the screw 330 forward at a set speed, and the cavity space 14 inside the mold unit 10 is filled with the liquid molding material accumulated in front of the screw 330. For example, a position or speed of the screw 330 is detected using an injection motor encoder 351. The injection motor encoder 351 detects the rotation of the injection motor 350 and sends signals indicating the detection results to the controller 700. If the position of the screw 330 reaches a set position, switching (so called V/P switching) from the filling process to the holding pressure process is performed. The position at which the V/P switching is performed is also referred to a V/P switching position. The set speed of the screw 330 may be changed according to the position of the screw 330, the time, or the like.

Moreover, in the filling process, after the position of the screw 330 reaches the set position, the screw 330 may temporarily stop at the set position, and thereafter, the V/P switching may be performed. Immediately before the V/P switching, instead of stopping the screw 330, the screw 330 may move forward or may move rearward at a very slow speed.

In the holding pressure process, the injection motor 350 is driven to push the screw 330 forward, a pressure (hereinafter, also referred to as a "holding pressure") of the molding material on a front end portion of the screw 330 is held at a set pressure, and the molding material remaining inside the cylinder 310 is pressed toward the mold unit 10. Insufficient molding materials can be replenished by cooling shrinkage in the mold unit 10. For example, the holding pressure is detected using the pressure detector 360. The pressure detector 360 sends signals indicating the detection results to the controller 700. A set value of the holding pressure may be changed according to an elapsed time from the starting of the holding pressure process, or the like.

In theholdingpressure process, themoldingmaterial inside the cavity space 14 in the mold unit 10 is gradually cooled, and when the holding pressure process is completed, an inlet of the cavity space 14 is closed by the molding material which is solidified. This state is referred to as a gate seal, and a backflow of the molding material from the cavity space 14 is prevented. After the holding pressure process, a cooling process starts. In the cooling process, solidification of the molding material in the cavity space 14 is performed. In order to shorten a molding cycle time, the plasticizing process may be performed during the cooling process.

In the plasticizing process, the plasticizing motor 340 is driven to rotate the screw 330 at a set rotating speed and the molding material is fed forward along the spiral grooves of the screw 330 by the screw 330. According to this, the molding material is gradually melted. The screw 330 moves rearward as the liquid molding material is fed to the front side of the screw 330 and is accumulated in front of the cylinder 310. For example, the rotating speed of the screw 330 is detected using aplasticizing motor encoder 341. The plasticizing motor encoder 341 detects the rotation of the plasticizing motor 340 and sends signals indicating the detection results to the controller 700.

In the plasticizing process, in order to restrict an abrupt rearward movement of the screw 330, the injection motor 350 may be driven so as to apply a set back pressure to the screw 330. For example, the back pressure with respect to the screw 330 is detected using the pressure detector 360. The pressure detector 360 sends signals indicating the detection results to the controller 700. If the screw 330 moves rearward to a plasticizing completion position and a predetermined amount of the molding materials is accumulated in front of the screw 330, the plasticizing process is completed.

In addition, the injection unit 300 of the present embodiment is an inline and screw type injection unit. However, the injection unit 300 may be a preplasticizing type injection unit. The preplasticizing type injection unit supplies molten molding material inside a plasticizing cylinder to an injection cylinder and injects the molding material from the injection cylinder into the mold unit. A screw is disposed to be rotatable or rotatable and movable forward or rearward in the plasticizing cylinder and a plunger is disposed to be movable forward or rearward in the injection cylinder.

In addition, the injection unit 300 of the present embodiment is a horizontal type injection unit in which the axial direction of the cylinder 310 is the horizontal direction. However, the injection unit 300 may be a vertical type injection unit in which the axial direction of the cylinder 310 is a vertical direction. The mold clamping unit combined with the vertical type injection unit 300 may be a vertical type mold clamping unit or a horizontal type mold injection unit. Similarly, the mold clamping unit combined with the horizontal type injection unit 300 may be a horizontal type mold clamping unit or a vertical type mold clamping unit.

### Movement Unit

Similarly to the descriptions of the injection unit 300, in descriptions of the movement unit 400, the movement direction (left direction in Figs. 1 and 2) of the screw 330 during filling is referred to as a front side, and the movement direction (right direction in Figs. 1 and 2) of the screw 330 during plasticizing is referred to as a rear side.

The movement unit 400 moves the injection unit 300 forward or rearward with respect to the mold unit 10. In addition, the movement unit 400 presses the nozzle 320 to the mold unit 10 to generate a nozzle touch pressure. The movement unit 400 includes a hydraulic pump 410, a motor 420 which is a drive source, a hydraulic cylinder 430 which is a hydraulic actuator, or the like.

The hydraulic pump 410 includes a first port 411 and a second port 412. The hydraulic pump 410 is a pump which can rotate in both directions and switches a rotation direction of the motor 420. Accordingly, a working liquid (for example, oil) is sucked from any one of first port 411 and the second port 412 and is discharged from the other, and thus, a liquid pressure is generated. In addition, the hydraulic pump 410 sucks the working liquid from a tank and can discharge the working liquid from any one of the first port 411 and the second port 412.

The motor 420 operates the hydraulic pump 410. The motor 420 drives the hydraulic pump 410 in the rotation direction and by rotation torque corresponding to the control signals from the controller 700. The motor 420 may be an electric motor or an electric servo motor.

The hydraulic cylinder 430 includes a cylinder body 431, a piston 432, and a piston rod 433. The cylinder body 431 is fixed to the injection unit 300. The piston 432 divides the inside of the cylinder body 431 into a front chamber 435 which a first chamber and a rear chamber 436 which is a second chamber. The piston rod 433 is fixed to the stationary platen 110.

The front chamber 435 of the hydraulic cylinder 430 is connected to the first port 411 of the hydraulic pump 410 via a first flow path 401. The working liquid discharged from the first port 411 is supplied to the front chamber 435 via the first flow path 401, and thus, the injection unit 300 is pushed forward. The injection unit 300 moves forward, and thus, the nozzle 320 is pressed to the stationary mold 810. The front chamber 435 functions as a pressure chamber which generates the nozzle touch pressure of the nozzle 320 by the pressure of the working liquid supplied from the hydraulic pump 410.

Meanwhile, the rear chamber 436 of the hydraulic cylinder 430 is connected to the second port 412 of the hydraulic pump 410 via a second flow path 402. The working liquid discharged from the second port 412 is supplied to the rear chamber 436 of the hydraulic cylinder 430 via the second flow path 402, and thus, the injection unit 300 is pushed rearward. The injection unit 300 moves rearward and thus, the nozzle 320 is separated from the stationary mold 11.

In addition, in the present embodiment, the movement unit 400 includes the hydraulic cylinder 430. However, the present invention is not limited to this. For example, instead of the hydraulic cylinder 430, an electric motor and a motion conversion mechanism which converts a rotary motion of the electric motor into a linear motion of the injection unit 300 may be used.

### Controller

For example, as shown in Figs. 1 and 2, the controller 700 includes a Central Processing Unit (CPU) 701, a recording medium 702 such as a memory, an input interface 703, and an output interface 704. The controller 700 performs various controls by causing the CPU 701 to execute a program stored in the recording medium 702. In addition, the controller 700 receives a signal from the outside through the input interface 703 and transmits a signal to the outside through the output interface 704.

The controller 700 repeatedly performs the mold closing process, the mold clamping process, the mold opening process, or the like to repeatedly manufacture the molding product. In addition, the controller 700 performs the plasticizing process, the filling process, the holding pressure process, or the like during the mold clamping process. A series of operations to obtain the molding product, for example, an operation from the start of the plasticizing process to the start of the next plasticizing process is referred to as "short molding". In addition, a time required for once short molding is also referred to as a "molding cycle".

The controller 700 is connected to an operation unit 750 or the display unit 760. The operation unit 750 receives an input operation from a user and outputs signals corresponding to the input operation to the controller 700. The display unit 760 displays an operation screen corresponding to the input operation of the operation unit 750 under the control of the controller 700.

The operation screen is used for the setting of the injection molding machine or the like. A plurality of operation screens are provided, and thus, are displayed to be switched or to overlap each other. A user operates the operation unit 750 while viewing the operation screen displayed by the display unit 760 to perform the setting (including an input of a set value) of the injection molding machine or the like.

For example, the operation unit 750 and the display unit 760 may be configured of a touch panel to be integrated with each other. In addition, in the present embodiment, the operation unit 750 and the display unit 760 are integrated with each other. However, the operation unit 750 and the display unit 760 may be provided to be independent to each other. In addition, a plurality of operation units 750 may be provided.

Load Reduction in Mold Clamping of Mold Clamping Unit

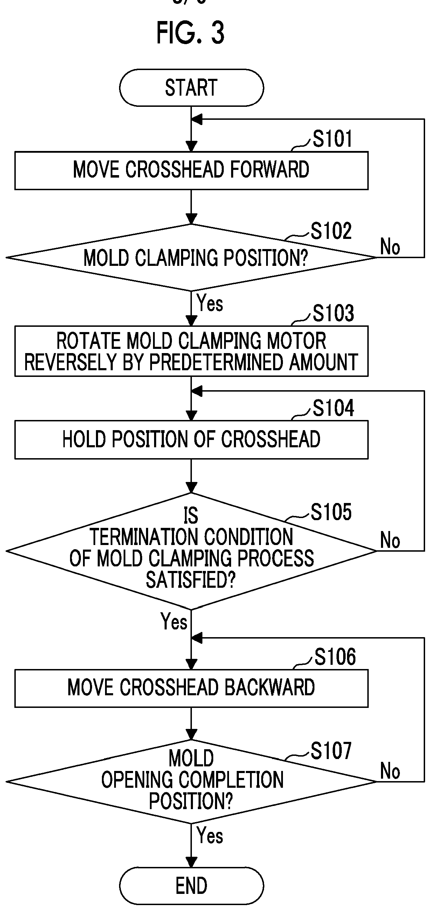

Fig. 3 is a flowchart showing processing of a controller according to the embodiment. Processing after Step S101 shown in Fig. 3 is performed when a start condition of the mold closing process is satisfied.

The controller 700 drives the mold clamping motor 160 to start the forward movement of the crosshead 151. According to this, the forward movement of the movable platen 120 starts, and the mold closing process starts. The crosshead 151 moves forward at the set speed.

The controller 700 checks whether or not the position of the crosshead 151 reaches the predetermined mold clamping position during the forward movement of the crosshead 151 (Step S102) . For example, the position or speed of the crosshead 151 is detected using a mold clamping motor encoder 161 or the like.

In a case where the position of the crosshead 151 does not reach the mold clamping position (No in Step S102) , the controller 700 returns to Step S101 and continues processing after Step S101. The set speed of the crosshead 151 may be changed according to the position of the crosshead 151 during the forward movement of the crosshead 151.

If the position of the crosshead 151 reaches the mold clamping position (Yes in Step S102) , the controller 700 rotates the mold clamping motor 160 by a predetermined amount in a direction opposite to a direction in which the mold clamping motor 160 moves the crosshead 151 in the mold closing direction (Step S103) . In Step S103, the mold clamping motor 160 rotates by the predetermined amount in the direction opposite to the drive direction of the mold clamping motor 160 while the crosshead 151 is pushed in the mold closing direction by the driving force of the mold clamping motor 160. A reverse rotation amount of the mold clamping motor 160 may be set to such an extent that a change of the mold clamping force does not affect the control of the mold clamping force.

In a case where the position of the crosshead 151 is positioned at the mold clamping position or in the vicinity of the mold clamping position, the link angle θ is 180° or a value close to 180°, and thus, a movement amount of the movable platen 120 is significantly smaller than a movement amount of the crosshead 151.

Accordingly, it is possible to set the reverse rotation amount of the mold clamping motor 160 to such an extent that the change of the mold clamping force does not affect the control of the mold clamping force. The reverse rotation amount of the mold clamping motor 160 may be represented by a rearward movement amount of the crosshead 151. The rearward movement amount is input to the operation unit 750, stored in the recording medium 702, and read out as necessary. In addition, data of the rearward movement amount may be either rewritable data or non-rewritable data.

Subsequently, the controller 700 holds the position of the crosshead 151 for a predetermined time at the position at which the mold clamping motor 160 is reversely rotated by the predetermined amount (Step S104). That is, the controller 700 holds the position of the crosshead 151 for the predetermined time at the position at which the crosshead 151 slightly moves rearward from the mold clamping position. In this case, the crosshead 151 is pushed in the mold closing direction by the driving force of the mold clamping motor 160.

The reverse rotation amount of the mold clamping motor 160 may be set to such an extent that the change of the position of the movable platen 120 does not affect the position control while the crosshead 151 slightly moves rearward. The change of the position of the movable platen 120 does not affect the position control, and thus, the mold clamping force does not substantially decrease. As described above, in the case where the position of the crosshead 151 is positioned at the mold clamping position or in the vicinity of the mold clamping position, the movement amount of the movable platen 120 is significantly smaller than the movement amount of the crosshead 151. Accordingly, it is possible to set the rearward movement amount of the crosshead 151 to such an extent that the change of the position of the movable platen 120 does not affect the position control.

In addition, the reason why the movable platen 120 is not displaced substantially rearward while the crosshead 151 slightly moves rearward is deviation is generated in the node of the toggle mechanism 150 or strain is generated in various links configuring the toggle mechanism 150.

It is considered that the reason why the position of the movable platen 120 is not displaced substantially is the movable mold 12 comes into close contact with the stationary mold 11 by the mold clamping. The close contact is generated by engagement between minute irregularities of a contact surface of the movable mold 12 coming into contact with the stationary mold 11 and minute irregularities of a contact surface of the stationary mold 11 coming into contact with the movable mold 12.

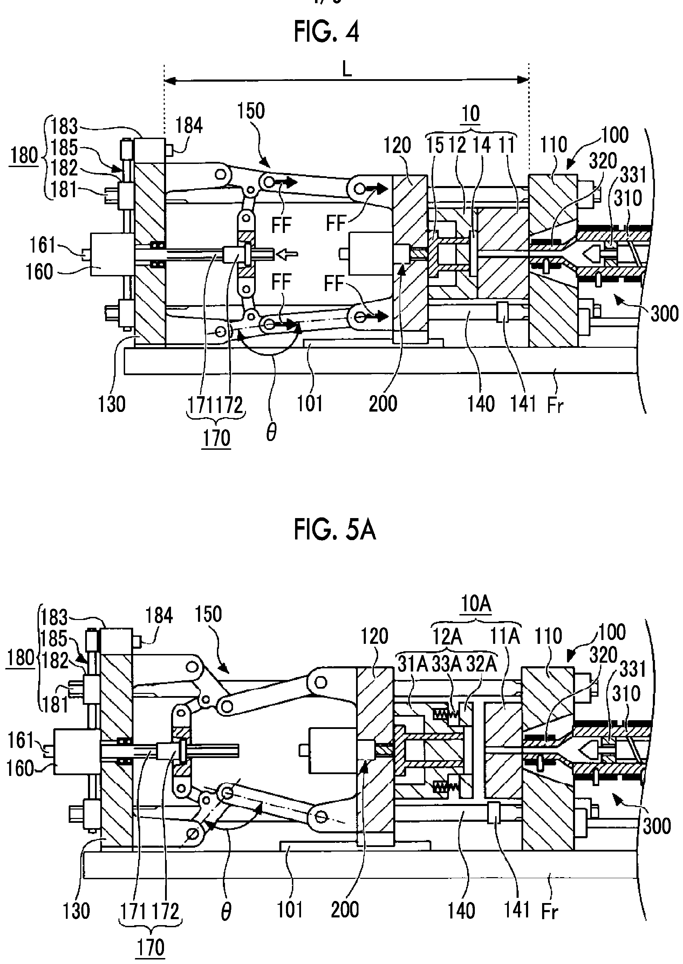

Fig. 4 is a view showing a state where a crosshead according to the embodiment moves in a mold closing direction, and thereafter, the crosshead is slightly displaced in a mold opening direction and the position of the crosshead is held. The crosshead 151 is displaced in the direction (rear side) opposite to the mold closing direction as shown by a hallow arrow in Fig. 4, and thus, friction forces FF in the mold closing direction are generated. For example, the friction forces FF are generated in the nodes of the toggle mechanism 150 or the like. Since the friction forces FF are used as the mold clamping force, it is possible to reduce the load of the mold clamping motor 160 for obtaining a predetermined mold clamping force.

Subsequently, the controller 700 checks whether or not a termination condition of the mold clamping process is satisfied (Step S105) . For example, the termination condition of the mold clamping process means that an elapsed time from the start of the position holding of Step S104 reaches a predetermined time. The elapsed time is measured by a timer or the like.

In a case where the termination condition of the mold clamping process is not satisfied (No in Step S105) , the controller 700 returns to Step S104 to continue the processing after Step S104, and thus, the mold clamping state of the mold unit 10 is held. The filling process, the holding pressure process, the plasticizing process, or the like is performed during the mold clamping process.

In a case where the termination condition of the mold clamping process is satisfied (Yes in Step S105) , the controller 700 proceeds to Step S106 and starts the rearward movement of the crosshead 151. Accordingly, the rearward movement of the movable platen 120 starts and the mold opening process starts. The crosshead 151 moves rearward at a set speed.

Subsequently, the controller 700 checks whether or not the position of the crosshead 151 reaches the mold opening completion position during the rearward movement of the crosshead 151 (Step S107) . In addition, during the rearwardmovement of the crosshead 151, the deviation in the node of the toggle mechanism 150 or the strain of the various links configuring the toggle mechanism 150 which is generated in Step S103 is eliminated.

In a case where the position of the crosshead 151 does not reach the mold opening completion position (No in Step S107), the controller 700 returns to Step S106 and continues the processing after Step S106. The set speed of the crosshead 151 may be changed according to the position of the crosshead 151 during the rearward movement of the crosshead 151.

Meanwhile, in a case where the position of the crosshead 151 reaches the mold opening completion position (Yes in Step S107), the controller 700 ends the current processing.

As described above, according to the present embodiment, after the crosshead 151 moves in the mold closing direction by the driving force of the mold clamping motor 160, the mold clamping motor 160 is rotated by a predetermined amount in the direction opposite to the direction in which the mold clamping motor moves the crosshead 151 in the mold closing direction, and thus, the crosshead 151 is displaced in the direction opposite to the mold closing direction. The friction forces FF can be generated in the mold closing direction, the friction forces FF can be used as the mold clamping force, and thus, it is possible reduce the load of the mold clamping motor 160 for obtaining a predetermined mold clamping force. In addition, it is possible to reduce the load of the mold clamping motor 160, it is possible to rapidly perform the mold opening operation of the crosshead 151, and it is possible to shorten the molding cycle. The position of the crosshead 151 being slightly closer to the mold opening completion position from the mold clamping position before starting the mold opening process also contributes the shortening of the molding cycle. Moreover, the load of the mold clamping motor 160 can be reduced, and thus, it is possible to decrease energy consumption.

Moreover, in the present embodiment, the reverse rotation amount of the mold clamping motor 160 when the crosshead 151 reaches the mold clamping position is set to such an extent that the change of the mold clamping force does not affect the control of the mold clamping force and to such an extent that the change of the position of the movable platen 120 does not affect the position control. However, the movable platen 120 may be slightly displaced rearward. In a case where the movable platen 120 moves forward to the same position as the position at which the movable platen 120 slightly moves rearward and is stopped and is stopped as it is, a direction in which each of the friction forces FF is applied becomes the rearward direction and becomes the direction opposite to the mold closing direction. Meanwhile, in a case where the movable platen 120 slightly moves rearward and is stopped, the direction in which each friction force FF is applied becomes the forward direction, and thus, the friction force FF can be used as the mold clamping force, and the load of the mold clamping motor 160 can be reduced.

Load Reduction in Compression Molding of Mold Clamping Unit

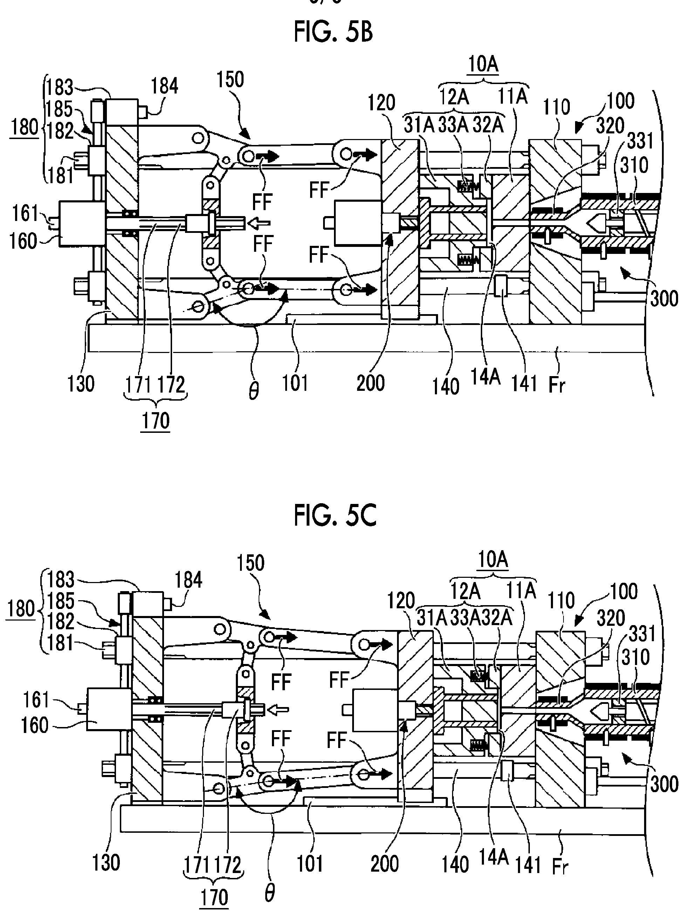

Figs. 5A to 5C are views showing an operation of compression molding of the mold clamping unit according to an embodiment. Fig. 5A shows a state where the crosshead is positioned at the mold opening completion position, Fig. 5B shows a state where the crosshead is slightly displaced rearward from the mold clamping position and the position of the crosshead is held, and Fig. 5C shows a state where the crosshead is slightly displaced rearward from a compression molding position and the position of the crosshead is held.

A mold unit 10A shown in Figs. 5A to 5C includes a stationary mold 11A which is attached to the stationary platen 110 and a movable mold 12A which is attached to the movable platen 120. The movable mold 12A includes a mold body portion 31A, a frame-shaped portion 32A, and a spring portion 33A. The frame-shaped portion 32A surrounds a protrusion portion of the mold body portion 31A and is connected to the mold body portion 31A via the spring portion 33A.

The controller 700 moves the crosshead 151 forward from the mold opening completion position shown in Fig. 5A to the mold clamping position, and thus, the movable platen 120 moves forward. Accordingly, the frame-shaped portion 32A of the movable mold 12A is pressed to the stationary mold 11A, the spring portion 33A of the movable mold 12A is contracted, and the cavity space 14A is formed between the mold body portion 31A of the movable mold 12A and the stationary mold 11A.

If the position of the crosshead 151 reaches the mold clamping position, the controller 700 rotates the mold clamping motor 160 by a predetermined amount in a direction opposite to the direction in which the mold clamping motor 160 moves the crosshead 151 in the mold closing direction. In this case, the mold clamping motor 160 may rotate by the predetermined amount in the direction opposite to the drive direction of the mold clamping motor 160 while the crosshead 151 is pushed in the mold closing direction by the driving force of the mold clamping motor 160. The reverse rotation amount of the mold clamping motor 160 may be set to such an extent that the change of the mold clamping force does not affect the control of the mold clamping force.

Subsequently, the controller 700 holds the position of the crosshead 151 for a predetermined time at the position at which the mold clamping motor 160 is reversely rotated by the predetermined amount (Step S104). That is, the controller 700 holds the position of the crosshead 151 for the predetermined time at the position (refer to Fig. 5B) at which the crosshead 151 slightly moves rearward from the mold clamping position. In this case, the crosshead 151 is pushed in the mold closing direction by the driving force of the mold clamping motor 160.

The crosshead 151 is displaced in the direction (rear side) opposite to the mold clamping direction as shown by a hallow arrow in Fig. 5B, and thus, the friction forces FF in the mold closing direction are generated. For example, the friction forces FF are generated in the nodes of the toggle mechanism 150 or the like. Since the friction forces FF are used as the mold clamping force, it is possible to reduce the load of the mold clamping motor 160 for obtaining a predetermined mold clamping force.

The controller 700 starts the filling process while the controller 700 holds the position of the crosshead 151 for the predetermined time at the position shown in Fig. 5B. While the position of the crosshead 151 is held for the predetermined time at the position shown in Fig. 5B, the cavity space 14A is filled with the molding material.

In addition, although it will be described in detail later, after the crosshead 151 is held for a predetermined time at the position shown in Fig. 5B, the crosshead 151 further moves forward to the compression molding position. Accordingly, when the position of the crosshead 151 is held at the position shown in Fig. 5B, the link angle θ becomes smaller than 180° and the toggle magnification becomes low. In this case, the significance capable of reducing the load of the mold clamping motor 160 is significant.

The controller 700 further moves the crosshead 151 forward from the position shown in Fig. 5B to the compression molding position, and thus, the movable platen 120 further moves forward. Accordingly, the spring portion 33A of the movable mold 12A is further contacted, the cavity space 14A decreases, and the molding material with which the cavity space 14A is filled is compressed.

If the position of the crosshead 151 reaches the compression molding position, the controller 700 rotates the mold clamping motor 160 by the predetermined amount in the direction opposite to the direction in which the mold clamping motor 160 rotates the crosshead 151 in the mold closing direction. In this case, the mold clamping motor 160 may rotate by the predetermined amount in the direction opposite to the drive direction of the mold clamping motor 160 while the crosshead 151 is pushed in the mold closing direction by the driving force of the mold clamping motor 160. The reverse rotation amount of the mold clamping motor 160 may be set to such an extent that the change of the mold clamping force does not affect the control of the mold clamping force.

Subsequently, the controller 700 holds the position of the crosshead 151 for a predetermined time at the position at which the mold clamping motor 160 is reversely rotated by the predetermined amount. That is, the controller 700 holds the position of the crosshead 151 for the predetermined time at the position (refer to Fig. 5C) at which the crosshead 151 slightly moves rearward from the compression molding position. In this case, the crosshead 151 is pushed in the mold closing direction by the driving force of the mold clamping motor 160.

The crosshead 151 is displaced in the direction opposite to the mold closing direction as shown by a hallow arrow in Fig. 5C, and thus, friction forces FF in the mold closing direction are generated. For example, the friction forces FF are generated in the nodes of the toggle mechanism 150 or the like. Since the friction forces FF are used as the mold clamping force, it is possible to reduce the load of the mold clamping motor 160 for obtaining a predetermined mold clamping force. In addition, it is possible to reduce the load of the mold clamping motor 160, it is possible to rapidly perform the mold opening operation of the crosshead 151, and it is possible to shorten the molding cycle. The position of the crosshead 151 being slightly closer to the mold opening completion position from the compression molding position before starting the mold opening process also contributes the shortening of the molding cycle. Moreover, the load of the mold clamping motor 160 can be reduced, and thus, it is possible to decrease energy consumption.

After the controller 700 holds the position of the crosshead 151 for the predetermined time at the position shown in Fig. 5C, the controller 700 moves the crosshead 151 rearward to the mold opening completion position shown in Fig. 5A. While the position of the crosshead 151 is held for the predetermined time at the position shown in Fig. 5C, the mold material with which the cavity space 14A is filled is solidified, and thus, a molding material is obtained.

In addition, in the present embodiment, after the position of the crosshead 151 is held for the predetermined time at the position shown in Fig. 5C, the crosshead 151 moves rearward to the mold opening completion position shown in Fig. 5A. However, meanwhile, the crosshead 151 moves forward or rearward. The controller 700 may move the crosshead 151 forward to a set position, may subsequently displace the crosshead 151 slightly rearward from the set position, and may hold the position of the crosshead 151 for the predetermined time. The number of set positions of the crossheads 151 is not limited.

In addition, the present embodiment, the movable mold 12A includes the mold body portion 31A, the frame-shaped portion 32A, and the spring portion 33A. However, the stationary mold 11A may include a mold body portion, a frame-shaped portion, and a spring portion. Moreover, as the member which is disposed between the mold body portion 31A and the frame-shaped portion 32A, a hydraulic cylinder may be used instead of the spring portion 33A. In addition, the mold unit 10A may be a spigot type unit or the like.

Load Reduction in Compression Molding of Ejector Unit

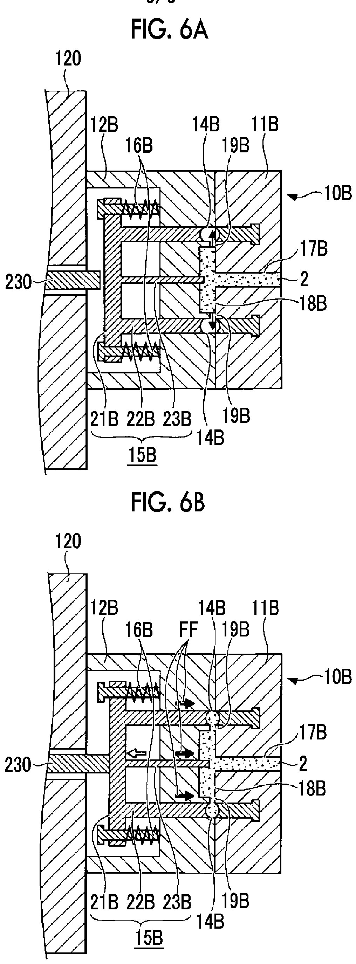

Figs. 6A and 6B are view showing an operation of compression molding of an ejector unit according to an embodiment. Fig. 6A shows a state when a position of the ejector rod is positioned at a compression standby position and Fig. 6B shows a state when the position of the ejector rod is displaced slightly rearward from the compression molding position and is held.

A mold unit 10B shown in Figs. 6A and 6B includes a stationary mold 11B which is attached to the stationary platen 110 and a movable mold 12B which is attached to the movable platen 120. As shown in Figs. 6A and 6B, when the mold is clamped, cavity spaces 14B are formed between the stationary mold 11B and the movable mold 12B. A molding material 2 reaches the cavity spaces 14B via a sprue 17B which is formed in the stationary mold 11B, runners 18B which are divided from a terminal end of the sprue 17B, and gates 19B which are provided on terminal ends of the runners 18B.

The ejector rod 230 of the ejector unit 200 is used to compress the molding material with which the cavity spaces 14B of the mold unit 10B are filled and to eject the molding product (hereinafter, referred to as a "compression-molded molding product") molded by the compression from the mold unit 10B. The compression of the molding material is performed before the molding material is completely solidified.

The ejector rod 230 can move forward or rearward through a through-hole penetrating the movable platen 120 in a forward-rearward direction. A front end portion of the ejector rod 230 comes into contact with a movable member 15B which is disposed to be movable forward or rearward inside the movable mold 12B.

As shown in Figs. 6A and 6B, the movable member 15B includes a plate-shaped ejector plate 21B which is perpendicular to the forward-rearward direction, rod-shaped compression core pins 22B which extends forward from the ejector plate 21B, and a rod-shaped ejector pin 23B which extends forward from the ejector plate 21B.

The ejector plate 21B is pushed forward by the ejector rod 230 which is disposed behind the ejector plate 21B. In addition, the ejector plate 21B is pushed rearward by springs 16B which are disposed in front of the ejector plate 21B.

The compression core pins 22B extend forward from the ejector plate 21B and penetrate the movable mold 12B. Front end surfaces of the compression core pins 22B become a portion of wall surfaces of the cavity spaces 14B. The compression core pins 22B move forward or rearward together with the ejector plate 21B and performs the compression of the molding material 2, a pressure release of the compression-molded molding product, and the ejection of the pressure-released molding product.

The ejector pin 23B extends forward from the ejector plate 21B and penetrate the movable mold 12B. As shown in Fig. 6A, the molding material 2 flowing through the runner 18B is attached to a front end portion of the ejectorpin 23B. The attached molding material 2 is solidified, and thus, comes into close contact with the front end portion of the ejector pin 23B. The ejector pin 23B is used to eject to the molding material 2 solidified by the runner 18B.

The front end portion of the ejector rod 230 is not connected to the movable member 15B. However, the front end portion may be connected to the movable member 15B. In addition, in a case where the front end portion of the ejector rod 230 is connected to the movable member 15B, the springs 16B may not exist.

If the ejector motor 210 is drive to move the ejector rod 230 forward, the movable member 15B moves forward to compress the molding material 2. Thereafter, if the ejector motor 210 is driven to move the ejector rod 230 rearward, the ejector rod 230 moves rearward while the movable member 15B is pressed against the ejector rod 230 by elastic restoring forces of the springs 16B, and thus, the pressure release of the molding product is performed. The pressure-released molding product protrudes from the movable mold 12B by the forward movement of the ejector rod 230.

The controller 700 controls the forward movement of the ejector rod 230 so as to control the compression of the molding material 2, controls the rearward movement of the ejector rod 230 so as to control the pressure release of the molding product, and controls the forward movement of the ejector rod 230 so as to control the ejection of the pressure-released molding product. Hereinafter, an operation of the compression molding of the ejector rod 230 will be described.

The controller 700 moves the ejector rod 230 forward from the compression standby position shown in Fig. 6A to the compression molding position from the start of the filling process to the completion of the holding pressure process. Accordingly, the movable member 15B moves forward, and the molding material 2 with which the cavity spaces 14B are filled is compressed.

In addition, when the ejector rod 230 is positioned at the compression standby position, the ejector rod 230 does not come into contact with the movable member 15B in Fig. 6A. However, the ejector rod 230 may come into contact with the movable member 15B. In the latter case, the ejector rod 230 may be connected to the movable member 15B.

If the position of the ejector rod 230 reaches the compression molding position, the controller 700 rotates the ejector motor 210 by the predetermined amount in the direction opposite to the direction in which the ejector motor 210 moves the ejector rod 230 forward. In this case, the mold clamping motor 160 may rotate by the predetermined amount in the direction opposite to the drive direction of the ejector motor 210 while the ejector rod 230 is pressed in the compression direction (front side) by the driving force of the ejector motor 210. The reverse rotation amount of the ejector motor 210 may be set to such an extent that a change of a compression force by which the molding material 2 is compressed does not affect the control of the compression force.

Subsequently, the controller 700 holds a position of the ejector rod 230 for a predetermined time at the position at which the ejector motor 210 is reversely rotated by the predetermined amount. That is, the controller 700 holds the position of the ejector rod 230 for the predetermined time at the position at which the ejector rod 230 slightly moves rearward from the compression molding position. In this case, the ejector rod 230 is pushed in the compression direction by the driving force of the ejector motor 210.

The ejector rod 230 is displaced in the direction (rear side) opposite to the compression direction as shown by a hallow arrow in Fig. 6B, and thus, friction forces FF in the compression direction are generated. For example, the friction forces FF are generated in the movable member 15B or the like. Since the friction forces FF are used as the mold clamping force, it is possible to reduce the load of the ejector rod 230 for obtaining a predetermined compression force.

After the controller 700 holds the position of the ejector rod 230 for a predetermined time at the position shown in Fig. 6B, the controller 700 moves the ejector rod 230 rearward to the compression standby position shown in Fig. 6A. While the position of the ejector rod 230 is held for the predetermined time at the compression standby position shown in Fig. 6A, the mold material with which the cavity spaces 14B is filled is solidified, and thus, a molding material is obtained.

In addition, in the present embodiment, after the position of the ejector rod 230 is held for the predetermined time at the position shown in Fig. 6B, the ejector rod 230 moves rearward to the compression standby position shown in Fig. 6A. However, meanwhile, the ejector rod 230 moves forward or rearward. The controller 700 moves the ejector rod 230 forward to a set position, subsequently displaces the ejector rod 230 slightly rearward from the set position, and holds the position of the ejector rod 230 for the predetermined time. The number of set positions of the ejector rod 230 is not limited.

### Modification and Improvement

Hereinbefore, the embodiment or the like of the injection molding machine is described. However, the present invention is not limited to the above-described embodiment or the like, and various modifications and improvements can be applied to the present invention within the scope defined in the appended claims.

For example, if the position of the ejector rod 230 reaches the ejection position in the ejection process, the controller 700 rotates the ejector motor 210 by the predetermined amount in the direction opposite to the direction in which the ejector motor 210 moves the ejector rod 230 forward. In this case, the mold clamping motor 160 may rotate by the predetermined amount in the direction opposite to the drive direction of the ejector motor 210 while the ejector rod 230 is pushed in the ejection direction (front side) by the driving force of the ejector motor 210. The reverse rotation amount of the ejector motor 210 may be set to such an extent that the change of the ejection force does not affect the control of the ejection force. Subsequently, the controller 700 holds the position of the ejector rod 230 for the predetermined time at the position at which the ejector motor 210 is reversely rotated by the predetermined amount. That is, the controller 700 holds the position of the ejector rod 230 for the predetermined time at the position (refer to Fig. 5B) at which the ejector rod 230 slightly moves rearward from the ejection position. In this case, the ejector rod 230 is pushed in the ejection direction by the driving force of the ejector motor 210. In this way, the ejector rod 230 is displaced in the direction (rear side) opposite to the ejection direction, and thus, the friction force in the ejection direction is generated. For example, the friction force is generated in a portion between the movable member 15 and the movable mold 12 or the like. Since the friction force is used as the ejection force, it is possible to reduce the load of the ejector motor 210 for obtaining a predetermined ejection force. While the position of the ejector rod 230 is held for the predetermined time at the position at which the ejector rod 230 moves slightly rearward from the ejection position, the molding product molded by the injection molding machine is extracted to the outside of the injection molding machine by an extraction machine.

In addition, if the holding pressure reaches a set pressure in the holding pressure process, the controller 700 rotates the injection motor 350 by the predetermined amount in the direction opposite to the direction in which the injection motor 350 moves the screw 330 forward. In this case, the injection motor 350 may rotate by the predetermined amount in the direction opposite to the drive direction while the screw 330 is pushed in the injection direction (front side) by the driving force of the injection motor 350. The reverse rotation amount of the injection motor 350 may be set to such an extent that the change of the holding pressure does not affect the control of the holding pressure. Subsequently, the controller 700 holds a position of the screw 330 for a predetermined time at the position at which the injection motor 350 is reversely rotated by the predetermined amount. That is, the controller 700 holds the position of the screw 330 for the predetermined time at a position at which the screw 330 moves slightly rearward from a position at which the holding pressure reaches a set pressure. In this case, the screw 330 is pushed in the injection direction by the driving force of the injection motor 350. In this way, the screw 330 is displaced in the direction opposite to the injection direction, and thus, a friction force in the injection direction is generated. For example, the friction force is generated in a portion between the screw 330 and the cylinder 310 or the like. Since the friction force is used as the holding pressure, it is possible to reduce the load of the injection motor 350 for obtaining a predetermined holding pressure. The set pressure of the holding pressure may be changed according to an elapsed time from the start of the holding pressure process, and every time the set pressure is changed, the injection motor 350 may be reversely rotated by a predetermined amount while the screw 330 is pushed in the injection direction (front side) by the driving force of the injection motor 350.

### Brief Description of the Reference Symbols

10: mold unit
12: movable mold
100: mold clamping unit
120: movable platen
150: toggle mechanism
151: crosshead
160: mold clamping motor
200: ejector unit
210: ejector motor
230: ejector rod
300: injection unit
310: cylinder
330: screw
350: injection motor
700: controller

## Claims

1. An injection molding machine, comprising:
a crosshead (151);
a mold clamping motor (160) which moves the crosshead (151); and
a controller (700) which controls the mold clamping motor (160),
**characterized in that** the controller (700) is configured to
(i) move the crosshead (151) in a predetermined direction via a driving force of the mold clamping motor (160), and thereafter,
(ii) rotate the mold clamping motor (160) by a predetermined amount in a direction opposite to a direction in which the mold clamping motor (160) moves the crosshead (151) in the predetermined direction, and
(iii) hold a position of the crosshead (151) for a predetermined time at a position at which the mold clamping motor (160) is rotated by the predetermined amount in a state where the crosshead (151) is pushed in the predetermined direction by the driving force of the mold clamping motor (160).

2. An injection molding machine, comprising:
an ejector rod (230);
an ejector motor (210) which moves the ejector rod (230) ; and
a controller (700) which controls the ejector motor (210),
**characterized in that** the controller (700) is configured to
(i) move the ejector rod (230) in a predetermined direction via a driving force of the ejector motor (210), and thereafter,
(ii) rotate the ejector motor (210) by a predetermined amount in a direction opposite to a direction in which the ejector motor (210) moves the ejector rod (230) in the predetermined direction, and
(iii) hold a position of the ejector rod (230) for a predetermined time at a position at which the ejector motor (210) is rotated by the predetermined amount in a state where the ejector rod (230) is pushed in the predetermined direction by the driving force of the ejector motor (210) .

3. An injection molding machine, comprising:
a screw (330);
an injection motor (350) which moves the screw (330) ; and
a controller (700) which controls the injection motor (350),
**characterized in that** the controller (700) is configured to
(i) move the screw (330) in a predetermined direction via a driving force of the inj ection motor (350), and thereafter,
(ii) rotate the injection motor (350) by a predetermined amount in a direction opposite to a direction in which the injection motor (350) moves the screw (330) in the predetermined direction, and
(iii) hold a position of the screw (330) for a predetermined time at a position at which the injection motor (350) is rotated by the predetermined amount in a state where the screw (330) is pushed in the predetermined direction by the driving force of the injection motor (350) .

4. The injection molding machine according to claim 1, further comprising:
a movable platen (120) to which a movable mold (12) is attached; and
a toggle mechanism (150) which moves the movable platen (120),
wherein the mold clamping motor (160) operates the toggle mechanism (150).

## Patentansprüche

1. Spritzgießmaschine, umfassend:
einen Kreuzkopf (151);
einen Formschließ/-klemmmotor (160), der den Kreuzkopf (151) bewegt; und
eine Steuerung (700), die den Formschließ/-klemmmotor (160) steuert,
**dadurch gekennzeichnet, dass** die Steuerung (700) konfiguriert ist, um
(i) den Kreuzkopf (151) in eine vorbestimmte Richtung via eine Antriebskraft des Formschließ/-klemmmotors (160) zu bewegen, und danach
(ii) den Formschließ/-klemmmotor (160) um einen vorbestimmten Betrag in eine Richtung entgegengesetzt einer Richtung zu drehen, in die der Formschließ/-klemmmotor (160) den Kreuzkopf (151) in die vorbestimmte Richtung bewegt, und
(iii) eine Position des Kreuzkopfs (151) für eine vorbestimmte Zeit an einer Position zu halten, an der der Formschließ/-klemmmotor (160) um den vorbestimmten Betrag gedreht wird, in einem Zustand, bei dem der Kreuzkopf (151) durch die Antriebskraft des Formschließ/-klemmmotors (160) in die vorbestimmte Richtung gedrückt wird.

2. Spritzgießmaschine, umfassend:
eine Auswerferstange (230);
einen Auswerfermotor (210), der die Auswerferstange (230) bewegt; und
eine Steuerung (700), die den Auswerfermotor (210) steuert,
**dadurch gekennzeichnet, dass** die Steuerung (700) konfiguriert ist, um
(i) die Auswerferstange (230) in eine vorbestimmte Richtung via eine Antriebskraft des Auswerfermotors (210) zu bewegen, und danach
(ii) den Auswerfermotor (210) um einen vorbestimmten Betrag in eine Richtung entgegengesetzt einer Richtung zu drehen, in die der Auswerfermotor (210) die Auswerferstange (230) in die vorbestimmte Richtung bewegt, und
(iii) eine Position der Auswerferstange (230) für eine vorbestimmte Zeit an einer Position zu halten, an der der Auswerfermotor (210) um den vorbestimmten Betrag gedreht wird, in einem Zustand, bei dem die Auswerferstange (230) durch die Antriebskraft des Auswerfermotors (210) in die vorbestimmte Richtung gedrückt wird.

3. Spritzgießmaschine, umfassend:
eine Schnecke (330);
einen Einspritzmotor (350), der die Schnecke (330) bewegt; und
eine Steuerung (700), die den Einspritzmotor (350) steuert,
**dadurch gekennzeichnet, dass** die Steuerung (700) konfiguriert ist, um
(i) die Schnecke (330) in eine vorbestimmte Richtung via eine Antriebskraft des Einspritzmotors (350) zu bewegen, und danach
(ii) den Einspritzmotor (350) um einen vorbestimmten Betrag in eine Richtung entgegengesetzt einer Richtung zu drehen, in die der Einspritzmotor (350) die Schnecke (330) in die vorbestimmte Richtung bewegt, und
(iii) eine Position der Schnecke (330) für eine vorbestimmte Zeit an einer Position zu halten, an der der Einspritzmotor (350) um den vorbestimmten Betrag gedreht wird, in einem Zustand, bei dem die Schnecke (330) durch die Antriebskraft des Einspritzmotors (350) in die vorbestimmte Richtung gedrückt wird.

4. Spritzgießmaschine nach Anspruch 1, ferner umfassend:
eine bewegliche Platte (120), an der eine bewegliche Form (12) befestigt ist; und
einen Kniehebelmechanismus (150), der die bewegliche Platte (120) bewegt,
wobei der Formschließ/-klemmmotor (160) den Kniehebelmechanismus (150) betätigt.

## Revendications

1. Une machine de moulage par injection, comprenant :
une traverse (151) ;
un moteur de fermeture de moule (160) qui déplace la traverse (151) ; et
un contrôleur (700) qui contrôle le moteur de fermeture de moule (160),
**caractérisée en ce que** le contrôleur (700) est configuré pour
(i) déplacer la traverse (151) dans une direction prédéterminée via une force d'entraînement du moteur de fermeture de moule (160), puis,
(ii) pivoter le moteur de fermeture de moule (160) selon une quantité prédéterminée dans une direction opposée à une direction dans laquelle le moteur de fermeture de moule (160) déplace la traverse (151) dans la direction prédéterminée, et
(iii) maintenir une position de la traverse (151) pendant une durée prédéterminée à un emplacement auquel le moteur de fermeture de moule (160) est pivoté selon la quantité prédéterminée dans un état dans lequel la traverse (151) est poussée dans la direction prédéterminée par la force d'entraînement du moteur de fermeture de moule (160).

2. Une machine de moulage par injection, comprenant :
une tige d'éjection (230) ;
un moteur d'éjection (210) qui déplace la tige d'éjection (230) ; et
un contrôleur (700) qui contrôle le moteur d'éjection (210),
**caractérisée en ce que** le contrôleur (700) est configuré pour
(i) déplacer la tige d'éjection (230) dans une direction prédéterminée via une force d'entraînement du moteur d'éjection (210), puis
(ii) pivoter le moteur d'éjection (210) selon une quantité prédéterminée dans une direction opposée à une direction dans laquelle le moteur d'éjection (210) déplace la tige d'éjection (230) dans la direction prédéterminée, et
(iii) maintenir une position de la tige d'éjection (230) pendant une durée prédéterminée à un emplacement auquel le moteur d'éjection (210) est pivoté selon la quantité prédéterminée dans un état dans lequel la tige d'éjection (230) est poussée dans la direction prédéterminée par la force d'entraînement du moteur d'éjection (210).

3. Une machine de moulage par injection, comprenant :
une vis (330) ;
un moteur d'injection (350) qui déplace la vis (330) ; et
un contrôleur (700) qui contrôle le moteur d'injection (350),
**caractérisée en ce que** le contrôleur (700) est configuré pour
(i) déplacer la vis (330) dans une direction prédéterminée via une force d'entraînement du moteur d'injection (350), puis
(ii) pivoter le moteur d'injection (350) selon une quantité prédéterminée dans une direction opposée à une direction dans laquelle le moteur d'injection (350) déplace la vis (330) dans la direction prédéterminée, et
(iii) maintenir une position de la vis (330) pendant une durée prédéterminée à un emplacement auquel le moteur d'injection (350) est pivoté selon la quantité prédéterminée dans un état dans lequel la vis (330) est poussée dans la direction prédéterminée par la force d'entraînement du moteur d'injection (350).

4. Une machine de moulage par injection selon la revendication 1, comprenant en outre :
une platine mobile (120) sur laquelle un moule mobile (12) est fixé ; et
un mécanisme de bascule (150) qui déplace la platine mobile (120),
dans laquelle le moteur de fermeture de moule (160) actionne le mécanisme de bascule (150).
